# FASCICULE DE BREVET EUROPEEN

(11) **EP 2 580 045 B1**
(45) Date de publication et mention de la délivrance du brevet: **19.03.2014**
(21) Numéro de dépôt: 11726373.1
(22) Date de dépôt: 01.06.2011
(51) Int. Cl.: B29C 49/46, B29C 49/68, B29C 49/06, B29C 49/64, A61L 2/20

(54) **PROCEDE DE RECYCLAGE D'AIR COMPORTANT UN AGENT STERILISANT ET INSTALLATION DE FABRICATION DE RECIPIENTS COMPORTANT UN CIRCUIT DE RECYCLAGE D'AIR**
VERFAHREN ZUR RÜCKFÜHRUNG VON LUFT MIT EINEM STERILISIERUNGSMITTEL SOWIE BEHÄLTERPRODUKTIONSANLAGE MTI EINEM RÜCKFÜHRKREISLAUF
METHOD OF RECYCLING AIR CONTAINING A STERILIZING AGENT, AND CONTAINER MANUFACTURING PLANT COMPRISING AN AIR RECYCLING CIRCUIT

(30) Priorité: 10.06.2010 FR 1054593
(43) Date de publication de la demande: 17.04.2013
(73) Titulaire: Sidel Participations, 76930 Octeville sur Mer (FR)
(72) Inventeur: ADRIANSENS, Eric, F-76930 Octeville sur Mer (FR)
(74) Mandataire: Gevers France
(86) Numéro de dépôt international: PCT/EP2011/059023
(87) Numéro de publication internationale: WO 2011/154294

(56) Documents cités:
- EP-A1- 1 941 913
- EP-A1- 2 191 953
- FR-A1- 2 774 912
- JP-A- 2008 207 434

## Description

La présente invention concerne un procédé de recyclage d'air comportant un agent stérilisant et une installation de fabrication de récipients comportant un circuit de recyclage d'air.

L'invention concerne plus particulièrement une installation pour la fabrication de récipients à partir d'une préforme en matière thermoplastique, comportant au moins une enceinte de protection destinée à isoler un volume intérieur de l'installation par rapport à l'air ambiant compris dans un local industriel d'implantation de l'installation et comportant agencés dans ledit volume intérieur au moins :
- un dispositif de décontamination des préformes par application d'au moins un agent stérilisant,
- une unité de conditionnement thermique des préformes constituée d'un four comportant des moyens de chauffage associés à un dispositif de refroidissement par air qui comporte des moyens de filtration de l'air ambiant et des moyens de ventilation propres à assurer un refroidissement d'au moins une partie des préformes,
- une unité de transformation des préformes en récipients,
et comportant un système d'extraction apte à extraire du volume intérieur de l'enceinte de l'air chargé en agent stérilisant pour l'évacuer dans l'atmosphère, à l'extérieur du local industriel, par l'intermédiaire d'au moins un conduit d'évacuation.

On connaît des installations de ce type pour la fabrication de récipients, notamment de bouteilles, de flacons, etc. à partir de préformes ou d'ébauches préalablement obtenues par injection de matière thermoplastique, en particulier de PET (PolyEthylène-Térephtalate).

A titre d'exemple, le document EP-2.191.953 décrit notamment un four de conditionnement thermique pour une installation de fabrication de récipients.

Pour produire des récipients stériles ou aseptiques, l'installation comporte généralement un dispositif ou module de décontamination apte à traiter les préformes au moyen d'un agent stérilisant.

Dans le domaine de la fabrication de récipients, les agents stérilisants utilisés sont par exemple le peroxyde d'hydrogène (H₂O₂), l'acide péracétique ou tout autre produit reconnu pour ses propriétés aseptiques, notamment bactéricides.

Selon les enseignements du document WO-2006/136498 ou WO-2006/136499, le dispositif de décontamination est par exemple apte à projeter en direction des préformes un flux de vapeur stérilisante, avantageusement un jet de vapeur sèche, comportant un agent stérilisant vaporisé destiné à être déposé par condensation sous la forme d'un film uniforme de buée d'agent stérilisant et cela au moins sur la paroi interne des préformes à stériliser.

Les préformes sont ensuite introduites dans le four de l'unité de conditionnement thermique où les moyens de chauffage, par exemple des lampes à rayonnement infrarouge, provoquent alors l'activation thermique et l'évaporation de l'agent stérilisant préalablement déposé par condensation.

Lorsque l'installation comporte de tels dispositifs de décontamination, il est nécessaire de prévenir la diffusion d'agent stérilisant dans l'air ambiant autour de l'installation, en particulier lorsque ce dernier est à l'état gazeux.

En effet, les vapeurs d'agent stérilisant comme le peroxyde d'hydrogène sont, d'une part, nocives pour la santé humaine et, d'autre part, corrosives pour les matériaux métalliques utilisés dans l'installation, en particulier dans le four ou l'unité de transformation.

Par conséquent, il importe d'assurer tant la protection des opérateurs intervenant sur l'installation que celle de l'installation elle-même afin d'éviter les dégradations imputables aux effets corrosifs des vapeurs d'agent stérilisant.

C'est l'une des raisons pour laquelle, une installation de fabrication de récipients comporte généralement une enceinte de protection assurant le confinement individuel de l'ensemble des moyens de fabrication et un système d'extraction associé pour l'évacuation de l'air chargé en agent stérilisant.

Dans certaines installations de la Demanderesse, le système d'extraction comporte au moins des premiers moyens d'extraction associés au dispositif de décontamination destinés à évacuer dans l'atmosphère l'air contenu dans une chambre de stérilisation du dispositif, c'est-à-dire à évacuer l'air chargé d'agent stérilisant à l'extérieur du bâtiment dans un local industriel duquel est implantée l'installation.

L'air compris dans la chambre de stérilisation est le plus chargé en agent stérilisant, notamment présent dans cet air à l'état gazeux lorsque son application sur les préformes est réalisée suivant la technique de dépôt par condensation précitée.

Toutefois, un tel procédé d'application de l'agent stérilisant permet avantageusement de réduire considérablement la quantité d'agent utilisée tout en ayant une efficacité accrue.

De préférence, le système d'extraction de l'installation comporte des deuxièmes moyens d'extraction qui, associés au four, sont destinés à évacuer dans l'atmosphère, donc à l'extérieur du local industriel, l'air contenu dans le volume intérieur du four délimité par une partie de l'enceinte de l'installation.

Grâce à de tels deuxièmes moyens du système d'extraction, on évacue conjointement hors du four d'une part les calories (air chaud) et, d'autre part, l'agent stérilisant présent en moindre proportion à l'état gazeux dans cet air.

On rappellera que la présence d'agent stérilisant dans l'air de refroidissement extrait du four résulte de l'évaporation par chauffage dans le four de l'agent stérilisant, tel que celle du film uniforme d'agent stérilisant déposé par condensation dans la chambre de stérilisation du dispositif de décontamination.

Avantageusement dans le système d'extraction d'une installation, les premiers moyens d'extraction associés au dispositif de décontamination comportent un conduit d'aspiration dont la sortie est raccordée au conduit d'évacuation que comportent les deuxièmes moyens d'extraction associés au four.

Ainsi, grâce à l'enceinte et aux premiers et deuxièmes moyens du système d'extraction, le système d'extraction évacue vers l'atmosphère par le conduit d'évacuation, d'une part, la chaleur produite par les moyens de chauffage du four avec l'air de refroidissement sans cesse renouvelé introduit par les moyens de ventilation et, d'autre part, l'agent stérilisant ayant une double origine respectivement la chambre de stérilisation du dispositif de décontamination pour l'essentiel et le four pour le résiduel.

Au final, la concentration en agent stérilisant présente dans l'air rejeté grâce au système d'extraction est conforme aux prescriptions environnementales.

En effet, la concentration en agent stérilisant est principalement élevée dans la chambre de stérilisation du dispositif de décontamination, ladite concentration en agent stérilisant étant automatiquement réduite par dilution dans l'air de refroidissement extrait avec un débit très supérieur par les deuxièmes moyens du système d'extraction, grâce à quoi la concentration en agent stérilisant dans l'air finalement rejeté dans l'atmosphère n'excède pas les valeurs limites autorisées.

Les débits d'air extrait de l'installation par un tel système peuvent par exemple atteindre des valeurs de l'ordre de 20.000 à 30.000 m³ d'air par heure selon le type de four et le phénomène de dilution est directement lié à l'importante consommation d'air du four, dès lors que celle du dispositif de décontamination n'y contribue pas pour plus de 1000 m³ par heure.

Dans une telle installation, l'air est ainsi systématiquement évacué dans l'atmosphère par l'intermédiaire d'un conduit d'évacuation du système d'extraction et cela pour évacuer tant la chaleur que les résidus d'agent stérilisant.

Cependant, la Demanderesse a pu établir que l'importance des débits d'air imputables tant au dispositif de refroidissement qu'au système d'extraction de l'installation avait indirectement des conséquences négatives sur la qualité de fabrication des récipients.

En effet, l'air évacué dans l'atmosphère est automatiquement remplacé dans le local industriel en étant principalement renouvelé par de l'air provenant de l'extérieur du bâtiment abritant le local industriel. Or, les qualités de cet air atmosphérique, introduit dans le local industriel depuis l'extérieur pour compenser l'importante quantité d'air évacuée par le système d'extraction, ne sont pas maîtrisées.

En particulier, la température de l'air, son degré d'humidité ou encore la présence indésirables de poussières comme de bactéries ne sont pas maîtrisées et sont autant de paramètres influençant directement la qualité de la fabrication.

De surcroît, de tels paramètres fluctuent en fonction de la localisation géographique du bâtiment comprenant l'installation, voir - pour une même localisation - en fonction de la saison qui est susceptible de modifier certains de ces paramètres qualitatifs comme la température de l'air (voir sur une même journée).

Toutefois pour l'homme du métier, l'évacuation de l'air par un tel système d'extraction apparaît comme impérative, en particulier du fait que l'air comporte de l'agent stérilisant.

De plus, l'homme du métier considère également le fait que le système d'extraction permet d'évacuer simultanément les calories issues du chauffage opéré dans le four, limitant ainsi le transfert de chaleur du four à l'air ambiant.

Pour contrôler la qualité de l'air ambiant du local industriel, il est possible de recourir à une transformation du local industriel pour en faire une "salle blanche", c'est-à-dire une enceinte étanche aménagée pour éliminer le plus possible les poussières et les micro-organismes, pour obtenir des conditions industrielles de fabrication d'ultra propreté dans le local industriel.

Toutefois, on comprendra aisément que si une telle transformation est toujours possible, les coûts associés tant pour la transformation du local industriel qu'ultérieurement pour l'exploitation de l'installation sont très onéreux, prohibitifs.

Il est connu du document EP-1.941.913 d'évacuer l'agent stérilisant vaporisé utilisé pour la stérilisation des préformes, du document FR-2.774.912 de recycler les vapeurs d'agent stérilisant.

Il est encore connu du document JP-2008.207434 un dispositif d'air conditionné recyclant de l'air extrait d'une zone dans laquelle est agencé un four, lequel air ne comporte toutefois pas d'agent stérilisant en l'absence de décontamination.

Le but de la présente invention est notamment de remédier aux inconvénients précités, en particulier de renouvellement d'air, et de proposer une installation plus performante, tout en étant économique et plus écologique.

Dans ce but, l'invention propose un procédé de recyclage d'air comportant un agent stérilisant dans une installation de fabrication de récipients, caractérisé en ce que ledit procédé comporte au moins les étapes consistant successivement à :
(a) - extraire de l'intérieur de l'enceinte de l'installation de l'air comportant un agent stérilisant ;
(b) - traiter au moins une partie dudit air extrait pour éliminer tout ou partie dudit agent stérilisant afin que la concentration finale en agent stérilisant dans l'air soit inférieure ou égale à une valeur de seuil déterminée ;
(c) - recycler l'air extrait et traité en réintroduisant au moins une partie dudit air dans un local industriel d'implantation de ladite installation.

Grâce au traitement de l'agent stérilisant dans l'air extrait, il est possible de procéder au recyclage de cet air auparavant et jusqu'alors toujours rejeté dans l'atmosphère pour les raisons précitées.

Avantageusement, l'air recyclé selon le procédé est ainsi susceptible d'être, préférentiellement à de l'air atmosphérique provenant de l'extérieur du bâtiment, réintroduit dans le local industriel constituant l'environnement extérieur direct de l'installation équipée d'une enceinte et d'un système d'extraction.

En effet, l'air recyclé est avantageusement destiné à être réinjecté directement dans le local industriel où cet air remplace l'air aspiré par le dispositif de refroidissement du four comportant les moyens de ventilation et présentant la plus importante consommation d'air.

Grâce à quoi, ledit air recyclé est susceptible de traverser à nouveau ultérieurement l'enceinte de protection, par exemple sous l'effet d'aspiration des moyens de ventilation, pour être admis dans le volume intérieur en tant qu'air de refroidissement d'où cet air sera ensuite extrait pour être traité afin d'être recyclable et avantageusement recyclé.

Un tel recyclage de l'air va à l'encontre des préjugés de l'homme de métier pour qui cet air doit être évacué vers l'atmosphère en raison de la présence d'agent stérilisant et également de la quantité importante de calories.

Dans ce but, l'invention propose également une installation du type décrite précédemment, caractérisée en ce que l'installation comporte un circuit de recyclage de l'air comportant des moyens de traitement aptes à éliminer tout ou partie de l'agent stérilisant d'au moins une partie de l'air extrait grâce au système d'extraction afin d'obtenir un air traité qui, présentant une concentration en agent stérilisant inférieure ou égale à une valeur de seuil déterminée, est recyclé en étant réintroduit dans le local industriel formant l'environnement extérieur de ladite installation.

Avantageusement, une installation équipée d'un circuit de recyclage selon l'invention est plus écologique en ce qu'elle permet à tout le moins de réduire, voire de supprimer, les rejets d'agent stérilisant dans l'atmosphère.

Grâce au procédé et au circuit de recyclage selon l'invention, on renouvelle en permanence l'air ambiant présent dans le local industriel, notamment aspiré par le dispositif de refroidissement par air du four, par de l'air recyclé présentant en particulier une qualité de propreté du fait de sa filtration par le dispositif de refroidissement.

Ainsi, l'air admis dans l'installation et en particulier dans le four est un air de qualité bien supérieure, en particulier plus propre du fait d'avoir déjà été filtré avant son admission dans le volume intérieur de l'installation et du fait d'avoir été en contact avec l'agent stérilisant.

De plus, l'air recyclé présente des paramètres tels que le degré d'humidité ou la température qui sont plus aisément contrôlés, notamment pour la température en régulant la température de l'air recyclé par des moyens de refroidissement, de préférence mis en oeuvre avant de procéder à la réintroduction de l'air recyclé dans le local industriel.

Avantageusement, l'air recyclé est automatiquement asséché lors de la circulation dans le four de sorte que les risques de voir apparaître de la condensation de vapeur d'eau, par exemple sur les moules ou autres organes de fabrication, sont également réduits.

On rappellera que de tels problèmes se rencontrent parfois dans certaines zones géographiques où l'air atmosphérique présente un degré d'humidité particulièrement élevé, voir saturé.

Grâce à l'invention, il n'est par conséquent plus nécessaire de recourir à la mise en place d'une salle blanche pour circonvenir la fluctuation des paramètres de l'air ambiant.

Selon d'autres caractéristiques de l'installation :
- le circuit de recyclage de l'air comporte au moins un conduit de recirculation comportant respectivement une entrée reliée au conduit d'évacuation du système d'extraction et une sortie débouchant directement dans le local industriel d'implantation de ladite installation, lesdits moyens de traitement destinés à éliminer tout ou partie de l'agent stérilisant présent dans l'air extrait circulant dans ledit conduit de recirculation étant au moins disposés entre lesdites entrée et sortie du conduit de recirculation ;
- le circuit de recyclage de l'air comporte des moyens de régulation aptes à commander sélectivement la répartition du flux d'air extrait entre le conduit d'évacuation débouchant dans l'atmosphère à l'extérieur du local industriel et le conduit de recirculation débouchant directement dans le local industriel d'implantation de l'installation ;
- les moyens de traitement sont constitués par au moins un filtre agencé pour être traversé par le flux d'air extrait à traiter circulant dans le conduit de recirculation du circuit de recyclage et comportant au moins un élément oxydant apte à provoquer une réaction catalytique avec l'air chargé en agent stérilisant afin de décomposer tout ou partie de l'agent stérilisant présent dans l'air en d'autres produits neutres et d'atteindre au moins ladite valeur de seuil
- le circuit de recyclage comporte des moyens de contrôle qui, agencés en aval des moyens de traitement, sont aptes à analyser la concentration en agent stérilisant présent dans l'air de manière à contrôler la concentration en agent stérilisant par rapport à ladite valeur de seuil déterminée ;
- les moyens de contrôle de l'air recyclé sont pilotés par une unité de commande qui est apte à actionner sélectivement des moyens de régulation lorsque la concentration en agent stérilisant est supérieure à ladite valeur de seuil, notamment aptes à dévier le flux d'air extrait vers le conduit d'évacuation ;
- le circuit de recyclage comporte un conduit de dérivation dont l'entrée est reliée au conduit de recirculation, en aval des moyens de traitement et en amont de la sortie du conduit d'évacuation, de manière à évacuer, avant la réintroduction dans le local industriel, tout air que les moyens de contrôle analysent comme présentant une concentration en agent stérilisant supérieure à ladite valeur de seuil ;
- le circuit de recyclage comporte des moyens de refroidissement de l'air qui sont aptes à être commandés sélectivement pour réguler la température de l'air circulant dans le conduit de recirculation afin que la température dudit air recyclé, destiné à être réintroduit dans le local industriel, soit inférieure ou égale à une température de consigne déterminée pour maintenir dans une plage optimale de températures la température ambiante de l'air dans ledit local ;
   -- les moyens de refroidissement sont agencés au moins dans le conduit de recirculation du circuit de recyclage de l'air afin de réguler la température de l'air recyclé.
   -- les moyens de refroidissement de l'air comportent au moins un échangeur thermique de type air-fluide dans lequel un fluide caloporteur est mis en circulation pour réaliser un transfert thermique entre ledit fluide caloporteur et l'air recyclé traversant ledit échangeur de manière à refroidir ledit air par transfert et opérer un transfert de chaleur de l'air vers le fluide caloporteur, laquelle chaleur est alors susceptible d'être utilisée notamment à des fins de chauffage des locaux industriels ou de production d'eau chaude ;
- le système d'extraction comportant au moins des premiers moyens d'extraction associés au dispositif de décontamination et des deuxièmes moyens d'extraction associés au four, les moyens de traitement sont agencés entre une chambre de stérilisation du dispositif dans laquelle les premiers moyens d'extraction aspire l'air chargé en agent stérilisant et un conduit d'aspiration dont l'entrée est reliée auxdits premiers moyens et dont la sortie est reliée au conduit d'évacuation ;
   -- le système d'extraction comporte au moins une hotte aspirante qui, associée au dispositif de décontamination, constitue les premiers moyens d'extraction ;
   -- le système d'extraction comporte au moins une hotte, dite principale, constituant les deuxièmes moyens d'extraction associés au four, ladite hotte principale communiquant avec l'entrée du conduit d'évacuation et étant complémentaire de la portion de l'enceinte entourant l'unité de conditionnement thermique de manière à en fermer la partie supérieure pour isoler ladite zone du volume intérieur comportant au moins le four, par rapport à l'environnement extérieur.

D'autres caractéristiques et avantages de l'invention, ainsi que des détails de conception et de réalisation apparaîtront à la lecture de la description détaillée qui va suivre pour la compréhension de laquelle on se reportera aux dessins annexés dans lesquels :
- la figure 1 est une vue schématique de dessus qui représente partiellement une installation de fabrication de récipient de la demanderesse illustrant l'état de la technique ;
- la figure 2 est une vue en coupe du four de l'unité de conditionnement thermique d'une installation selon la figure 1 et qui illustre en partie le système d'extraction ;
- la figure 3 est une vue en perspective qui représente une installation selon la figure 1 et qui illustre le système d'extraction associé et le circuit de recyclage selon un exemple de réalisation de l'invention ;
- la figure 4 est une représentation schématique du circuit de recyclage selon l'exemple de réalisation de la figure 3.

Dans la description et les revendications, on adoptera par convention et à titre non limitatif les termes "avant" ou "arrière" en référence à la direction longitudinale, "supérieur" et "inférieur", en référence à la direction verticale et selon la gravité terrestre, et les directions longitudinale, verticale et transversale en référence aux trièdres (L, V, T) indiqués sur les figures.

On utilisera aussi les expressions "amont" et "aval" en référence au sens de circulation du flux d'air dans l'installation et/ou dans le circuit de recyclage de l'air.

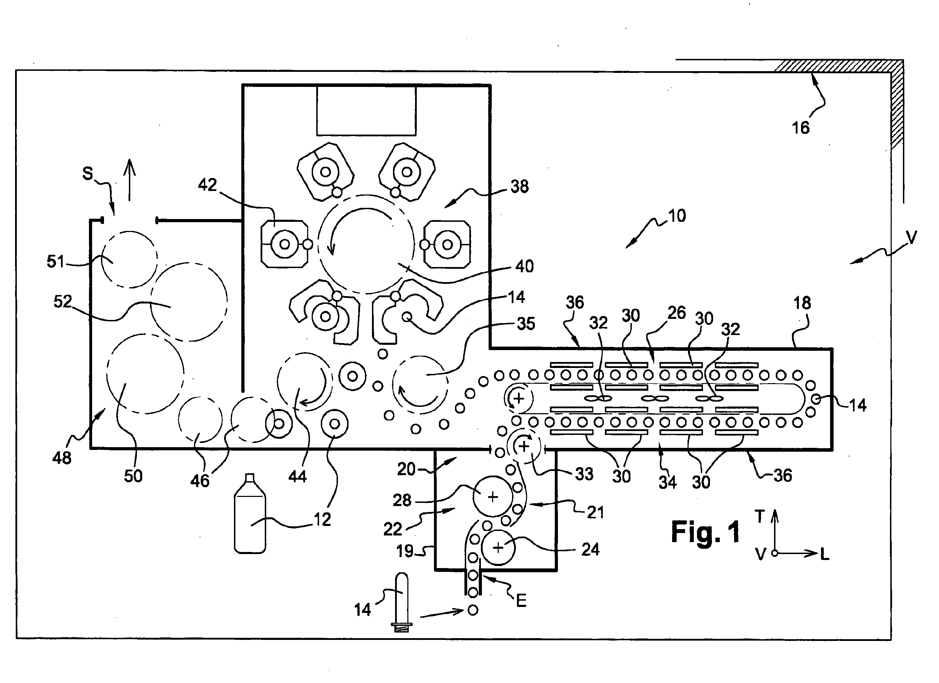

On a représenté schématiquement à la figure 1, une installation 10 pour la fabrication de récipients 12 à partir d'une préforme 14 en matière thermoplastique qui, de manière non limitative, illustre un exemple de réalisation d'une installation constituant l'état de la technique pour la demanderesse.

La figure 1 représente encore un exemple de préforme 14 pour la fabrication d'un récipient 12 formant un corps creux, ladite préforme 14 étant destinée à être conditionnée thermiquement puis transformée pour obtenir ledit récipient 12, tel qu'une bouteille, un flacon, etc.

De préférence, l'opération de transformation de la préforme 14 conditionnée thermiquement est réalisée par soufflage ou par étirage-soufflage, en variante en tout ou partie par remplissage au moyen d'un liquide sous pression propre à former le récipient.

Par définition, le terme "récipient" désigne dans la suite de la présente description aussi bien le récipient final obtenu par un procédé de fabrication à une seule étape de transformation d'une préforme aboutissant directement au récipient final, telle que la bouteille illustrée en détail à la figure 1, qu'un récipient intermédiaire obtenu dans le cas de mise en oeuvre d'un procédé à plusieurs étapes de transformation.

L'installation 10 est implantée dans un local industriel 16 généralement fermé se trouvant au sein d'un bâtiment (non représenté) et qui présente un volume V d'air ambiant constituant un environnement extérieur déterminé autour de l'installation 10.

Avantageusement, l'installation 10 comporte au moins une enceinte 18 de protection de l'installation destinée à isoler, par rapport audit environnement extérieur formé par l'air ambiant du local industriel 16 d'implantation de l'installation 10, un volume interne 20 de l'installation 10 à l'intérieur duquel sont agencés les différents moyens de fabrication des récipients 12.

L'installation 10 est associée à un système d'alimentation en préformes 14. Un tel système d'alimentation (non représenté) est par exemple décrit dans le document WO-2005/070793 auquel on reportera pour de plus amples détails.

Le système d'alimentation comporte par exemple une trémie dans laquelle sont stockées en vrac des préformes 14 qui sont prélevées par des moyens ascenseurs puis mises en position, généralement en file les unes derrière les autres, entre des rails inclinés qui acheminent par gravité lesdites préformes 14 jusqu'à des moyens de prise en charge agencés à une entrée E de l'installation 10.

De préférence, les préformes 14 sont positionnées dans une position déterminée, par exemple col en haut pour reposer sur les rails par l'intermédiaire de leur collerette.

Des moyens d'élimination tels que décrit dans le document WO-2005/070793 sont avantageusement disposés sur le parcours afin d'éliminer les préformes 14 mal positionnées.

L'installation 10 comporte un dispositif 22 de décontamination des préformes 14, notamment par application d'au moins un agent stérilisant.

Le dispositif 22 de décontamination, encore appelé module de décontamination, est avantageusement conçu comme un dispositif autonome afin de pouvoir être inclus sélectivement à l'installation 10 en fonction des applications.

Le dispositif 22 ou module de décontamination de l'installation 10 comporte une enceinte 19 de protection qui est de préférence distincte de l'enceinte 18, en variante qui est formée par une portion de l'enceinte 18 globale de protection délimitant le volume intérieur 20 comprenant lesdits moyens de fabrication des récipients 12.

L'enceinte 19 de protection du dispositif 22 de décontamination délimite un volume intérieur formant une chambre 21 de stérilisation dans laquelle les préformes 14 sont traitées au moyen d'un agent stérilisant.

De préférence, le dispositif 22 de décontamination des préformes 14 comporte des moyens (non représentés) de décontamination par rayonnement ultraviolet aptes à stériliser tout ou partie de la préforme, notamment les cols des préformes 14.

De tels moyens de décontamination par rayonnement ultraviolet sont par exemple agencés le long du parcours des préformes 14 défini par les rails du système d'alimentation.

A l'extrémité inférieure des rails, les préformes 14 sont saisies individuellement par une roue de chargement 24 agencée à l'entrée E de l'installation 10.

De préférence, le dispositif 22 de décontamination est agencé à l'entrée E de l'installation 10 et en amont d'une unité de conditionnement thermique constituée principalement par au moins un four 26.

De préférence, le dispositif 22 de décontamination est apte à projeter un jet de vapeur sèche sur les préformes 14 de manière à provoquer le dépôt par condensation d'un film uniforme de buée d'agent stérilisant sur au moins la paroi interne des préformes 14 à stériliser.

Avantageusement, l'agent stérilisant appliqué par le dispositif 22 de décontamination comporte du peroxyde d'hydrogène (H₂O₂), par exemple un mélange d'eau et de peroxyde d'hydrogène qui est vaporisé grâce à des moyens de vaporisation par chauffage (non représentés) que comporte le dispositif 22 de décontamination.

Le dispositif 22 de décontamination comporte par exemple une roue 28 de stérilisation pourvue de moyens de support des préformes 14 grâce auxquels les préformes 14 circulent cols en haut sous des buses d'application du flux de vapeur sèche d'agent stérilisant qui pénètre dans la préforme 14 par l'ouverture délimitée par le col.

Un tel dispositif 22 de décontamination est par exemple décrit dans le document FR-2.899.219 auquel on reportera pour une description plus détaillée dudit dispositif.

Les préformes 14 sont ensuite transférées de la roue 28 de stérilisation du dispositif 22 de décontamination vers le four 26 grâce à une roue 33 de transfert.

L'unité de conditionnement thermique de l'installation 10 formée par le four 26 comporte principalement des moyens 30 de chauffage et des moyens 32 de ventilation associés pour procéder au conditionnement thermique des préformes 14.

Avantageusement, le four 26 comporte un dispositif 34 de refroidissement qui, associé aux moyens 30 de chauffage, comporte respectivement des moyens 36 de filtration et lesdits moyens 32 de ventilation.

En entrée du four 26, les préformes 14 sont transférées de la roue 33 à un dispositif de convoyage (non représenté) tel qu'une chaîne sans fin portant des moyens de support des préformes 14 et destiné à les transporter suivant un parcours déterminé s'achevant à la sortie du four 26, par exemple ici un parcours en "U" comprenant deux tronçons longitudinaux de chauffage parallèles, l'un aller, l'autre retour, raccordés entre eux un tronçon curviligne transversal, dit de stabilisation.

De préférence, les moyens de support du dispositif de convoyage sont aptes à entraîner en rotation sur elle-même chaque préforme 14 afin de favoriser une répartition appropriée de la chaleur dans le corps de chaque préforme 14.

Le document EP-1.699.613 décrit un exemple de four comportant des moyens de chauffage et des moyens de ventilation pour le conditionnement thermique de préformes.

Avantageusement, le four comporte des moyens de stérilisation par émission de rayonnement ultraviolet qui sont agencés dans le tronçon curviligne de stabilisation tel que décrit dans le document WO-2008/049876.

Après leur conditionnement thermique par le four 26, les préformes 14 sont transportées par au moins une roue 35 de transfert de la sortie du four 26 jusqu'à une unité 38 de transformation des préformes 14 en récipients 12.

Avantageusement, l'unité 38 de transformation est ici constituée par une machine de soufflage (ou souffleuse).

Dans l'exemple représenté à la figure 1, la machine de soufflage est du type rotative et comporte un carrousel 40 équipé d'une pluralité de postes qui sont répartis circonférentiellement et qui sont chacun pourvu principalement de moyens 42 de moulage et de moyens associés (non représentés) de soufflage ou d'étirage-soufflage.

De préférence, les récipients 12 obtenus sont ensuite transportés, par exemple par des roues 44, 46 de transfert, vers une unité 48 de remplissage.

Avantageusement, l'unité 48 de remplissage comporte au moins une machine 50 de remplissage et de préférence également une machine 52 de bouchage, lesdites machines 50, 52 (non représentées en détails) étant aptes à procéder successivement au remplissage des récipients 12 puis à la fermeture des récipients 12 remplis, par exemple au moyen de bouchons à vis complémentaires des cols.

De préférence, l'unité 48 de remplissage est juxtaposée à l'unité 38 de transformation de manière à obtenir une installation 10 compacte dans laquelle l'intégralité du processus de fabrication est mis en oeuvre jusqu'à obtention finale de récipients 12 remplis et fermés, voir également étiquetés.

Les récipients 12 sont par exemple acheminés vers une sortie S par une roue 51 de transfert et sont alors susceptibles d'être conditionnés, notamment mis en lots, emballés et palettisés, pour leur expédition aux fins de commercialisation.

Comme illustré sur la figure 1, l'enceinte 18 de protection de l'installation 10 délimite un volume intérieur 20 général dans lequel sont disposés l'ensemble des moyens de fabrication 26, 38, 48 qui viennent d'être décrits et qui sont ainsi confinés, isolés de l'air ambiant de l'environnement extérieur, tout comme l'est la chambre 21 de stérilisation du dispositif 22 de décontamination par l'enceinte 19 de protection.

Les enceintes 18, 19 sont matérialisées en trait fort sur la figure 1 et sont par exemple constituées par un ensemble de parois verticales formées par des panneaux et le cas échéant d'au moins une paroi horizontale pour former un plafond.

On décrira maintenant le fonctionnement et les circulations d'air se produisant entre l'air ambiant contenu dans le local industriel 16 et l'installation 10 qui s'y trouve implantée.

Dans une telle installation 10, la circulation de l'air dans le four 26 débute avec l'aspiration par les moyens 32 de ventilation du dispositif ou module 22 de décontamination d'air ambiant qui est puisé dans le local industriel 16.

De préférence, l'air est filtré par les moyens 36 de filtration du dispositif 34 de refroidissement lors de son introduction à l'intérieur du four 26.

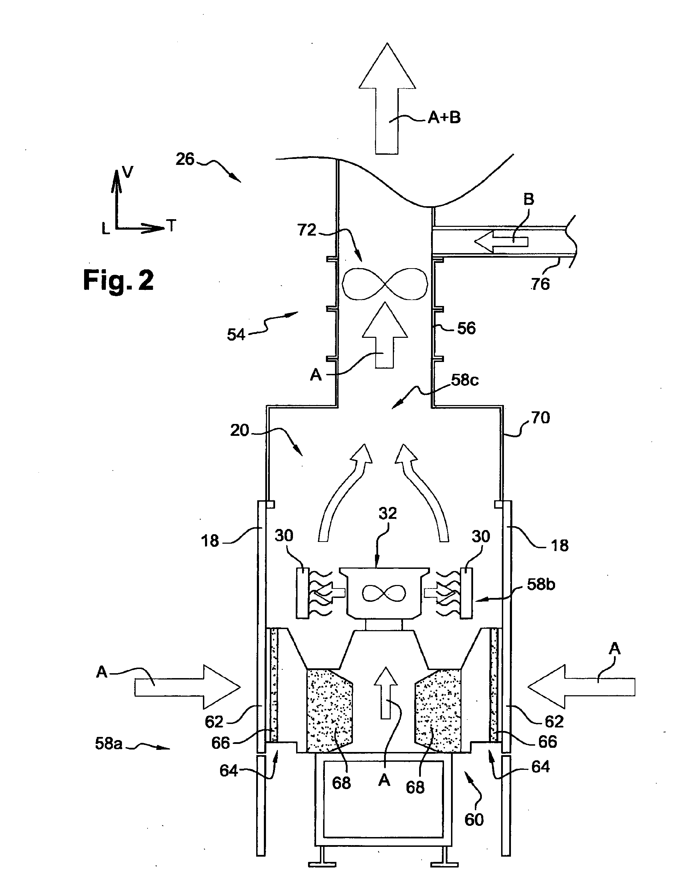

Le flux d'air correspondant est illustré sur la figure 2 par des flèches "A" au voisinage des ouvertures d'admission de l'air destiné au refroidissement d'au moins une partie des préformes 14.

A l'intérieur du four 26, l'air filtré est amené jusqu'à la zone de chauffage des préformes 14 où l'air entre en particulier en contact avec les corps des préformes 14 pour opérer leur refroidissement, de préférence également celui des cols des préformes et de leurs moyens de support.

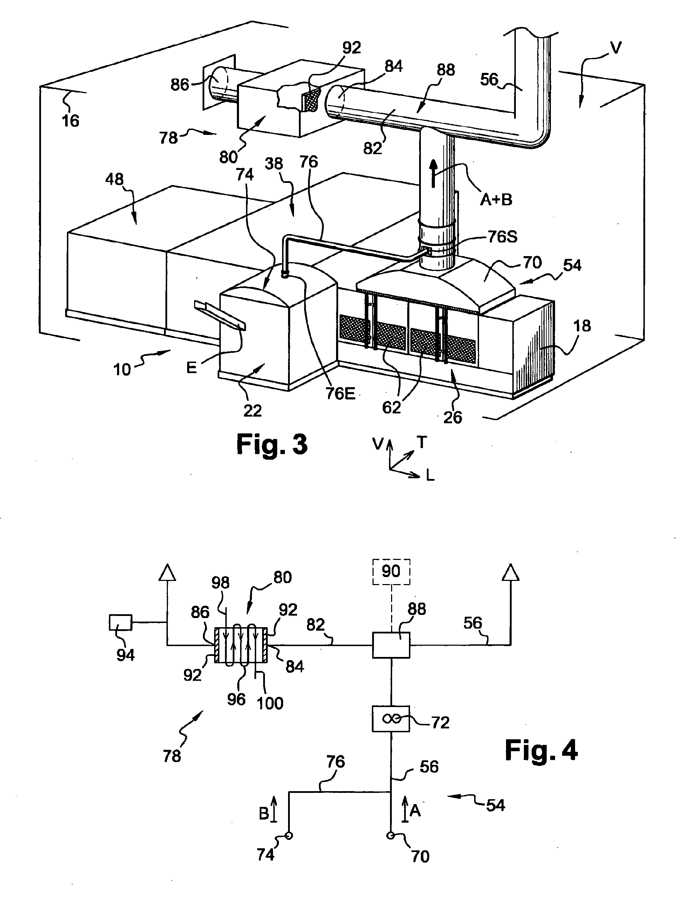

L'installation 10 comporte un système 54 d'extraction d'air comportant de préférence au moins des premiers moyens 74 d'extraction (figure 3) associés au dispositif 22 de décontamination et des deuxièmes moyens 70 d'extraction associés au four 26.

Les premiers moyens 74 d'extraction sont destinés à extraire l'air chargé en agent stérilisant contenu dans la chambre 21 de stérilisation du dispositif 22 de décontamination tandis que les deuxièmes moyens 70 d'extraction aspirent hors du four 26 l'air utilisé pour le refroidissement comportant également ici de l'agent stérilisant.

Le système 54 d'extraction est apte à extraire du volume intérieur de l'air chargé en agent stérilisant pour l'évacuer dans l'atmosphère à l'extérieur du local industriel 16 par l'intermédiaire d'au moins un conduit 56 d'évacuation, tel que cela a été expliqué précédemment.

Grâce à un tel système 54 d'extraction d'air, on évacue avec l'air, d'une part, la chaleur produite par le four 26 et, d'autre part, dans le cas d'une installation 10 comportant un dispositif 22 de décontamination, l'agent stérilisant présent dans l'air, ici à l'état gazeux, issu de la chambre 21 de stérilisation du dispositif et également de l'évaporation par chauffage survenant dans le four 26.

Avantageusement, un système d'insufflation d'air est associé à l'unité 38 de transformation comportant ici une machine de soufflage, ledit système étant intégré dans une partie supérieure de l'enceinte 18 formant un plafond.

Ce système d'insufflation est destiné à insuffler de l'air dans la partie associée de volume intérieur 20 isolé de l'environnement extérieur par une partie de l'enceinte 18, et ceci afin d'y établir une surpression permettant de réduire efficacement les risques de pollution depuis l'extérieur, notamment par des particules aéroportées.

Le système d'insufflation puise donc dans le local industriel 16 un volume donné d'air ambiant.

Un système d'insufflation d'air analogue équipe l'unité 48 de remplissage afin d'établir également une surpression à l'intérieur du volume intérieur 20 délimité par l'enceinte 18, le système d'insufflation puisant l'air ambiant dans le local industriel 16 d'implantation.

A titre d'exemples non limitatifs, la consommation d'air ou débit d'air aspiré par un système d'insufflation d'unité 38 de transformation est de l'ordre de 8000 m³ par heure, tandis que celle du système d'insufflation d'une unité 48 de remplissage est de l'ordre de 10.000 m³ par heure.

Pour de plus amples détails sur la réalisation et les avantages de tels systèmes d'insufflation d'air filtré pour établir localement une surpression dans la zone occupée par la machine 38 à l'intérieur de l'enceinte, on se reportera avantageusement au document FR-2.915.127.

Plus importante encore est l'air consommé par le dispositif 34 de refroidissement par air associé au four 26 puisque l'on atteint par exemple des valeurs de l'ordre de 20.000 à 30.000 m³ par heure selon le type de four, en particulier le nombre de module de chauffe.

Pour un four 26 de conception modulaire, la consommation d'air par module de chauffage est de l'ordre de 1300 m³ par heure, le four pouvant comporter par exemple vingt modules.

Or, la quantité d'air ambiant puisée dans le local industriel 16 par le dispositif 34 de refroidissement et son évacuation ensuite vers l'atmosphère provoquent une admission massive d'air atmosphérique dans le local industriel 16 pour compenser l'air qui est évacué par le conduit 56 d'évacuation du système 54 d'extraction.

De plus, le renouvellement de l'air ambiant par de l'air atmosphérique conduit à une importante variation des paramètres qualitatifs de l'air (température, humidité, propreté...) qui affectent directement le procédé de fabrication et tout particulièrement le conditionnement thermique dès lors que cette étape revêt une importance capitale pour la transformation ultérieure et l'obtention d'un récipient 12 de bonne qualité.

Surtout, l'absence de propreté (poussières, micro-organismes, ...) de l'air atmosphérique conduit à dégrader le taux de contamination (degré de stérilité) des récipients 12 fabriqués.

De surcroît, cela conduit également à un encrassement prématuré des moyens 36 de filtration du dispositif 34 de refroidissement.

Une des conséquences est une réduction de la durée de vie des moyens de filtration et une augmentation de la fréquence des opérations de maintenance nécessitant un arrêt complet de la fabrication, faute de quoi le degré de propreté des récipients 12 fabriqués s'en trouve directement affecté et rapidement dégradé.

L'incidence négative concerne donc autant les coûts d'exploitation de l'installation 10 de fabrication de récipients que la qualité des récipients 12 fabriqués, dont le degré de propreté.

Tel qu'illustré à la figure 2, le système 54 d'extraction d'air comporte au moins un conduit 56 d'évacuation par l'intermédiaire duquel l'air extrait du volume intérieur 20 est susceptible d'être évacué, la sortie dudit conduit 56 d'évacuation débouchant dans l'atmosphère, c'est-à-dire à l'extérieur du local industriel 16.

La figure 2 représente une vue en coupe transversale du four 26 et illustre tout particulièrement par des flèches la circulation de l'air aspiré à l'intérieur du four 26 pour y refroidir les préformes 14 en cours de conditionnement thermique par les moyens 30 de chauffage.
Dans l'exemple de réalisation représenté de manière non limitative sur les figures 1 à 3, le four 26 a globalement la forme d'un tunnel qui s'étend longitudinalement, d'arrière en avant, depuis un premier côté arrière ouvert où sont agencés les roues de transfert 33 et 35 des préformes 14 respectivement associées à l'entrée et à la sortie du four 26 et jusqu'à un second côté avant qui, adjacent au tronçon de stabilisation, est fermé par une des parois de l'enceinte 18.

Toutefois, le four 26 s'ouvre sur une zone en surpression du fait du système d'insufflation d'air avantageusement associé à la machine de soufflage de l'unité 38 de transformation et comprise dans le volume intérieur 20 isolé par l'enceinte 18 de l'air ambiant du local industriel 16, grâce à quoi on réduit efficacement les risques de pollution du volume intérieur 20 de fabrication, notamment par des particules aéroportées.

Comme on peut le voir sur la figure 2, le four 26 est traversé par un flux d'air A de refroidissement des préformes 14, qui s'écoule d'amont en aval à travers le four 26, plus précisément ici verticalement du bas vers le haut.

Le parcours de l'air de refroidissement dans le four 26 comporte successivement, selon le sens d'écoulement du flux d'air A, une zone 58a d'admission d'air, encore dite zone amont, une zone 58b de chauffage des préformes 14 et une zone 58c d'extraction d'air, encore dite zone aval.

Avantageusement, le système 54 d'extraction est agencé au moins au dessus du four 26 de manière à extraire l'air utilisé pour le refroidissement depuis la zone 58c d'extraction.

L'écoulement du flux d'air A s'effectue successivement à travers les trois zones 58a, 58b, 58c superposées verticalement, c'est-à-dire suivant un gradient thermique depuis la zone la plus froide vers la zone la plus chaude afin d'exploiter le principe de convection.

De préférence, la zone d'admission 58a d'air comporte au moins une chambre 60 de répartition d'air, dite plenum, qui est ici de la forme d'un caisson parallélépipédique dans lequel le flux d'air A de refroidissement pénètre en traversant une grille 62 d'aération disposée dans l'enceinte 18.

L'air ambiant du local industriel 16 formant l'environnement extérieur s'écoule ainsi depuis l'extérieur du four 26 vers l'intérieur du four 26 pour refroidir les préformes 14.

Le plenum 60 comporte une première grande face verticale longitudinale qui est équipée d'une première bouche 64 d'admission d'air présentant de préférence une forme évasée avec une section transversale croissante vers l'extérieur du four 26 et comportant avantageusement les moyens 36 de filtration.

De préférence, les moyens 36 de filtration comportent un pré-filtre 66 qui est agencé au voisinage d'un orifice amont de la bouche 64 d'admission et un filtre 68 qui est agencé au voisinage d'un orifice aval de la bouche 64 d'admission, la section de passage du pré-filtre 66 étant supérieure à la section de passage du filtre 68.

De préférence, le pré-filtre 66 est un filtre gravimétrique, qui est apte à filtrer des particules dites grossières, qui sont d'un diamètre déterminé, par exemple supérieur à dix microns, tandis que le filtre 68 est un filtre qui est apte à filtrer des particules dites fines d'un diamètre déterminé, par exemple supérieur à un micron.

De préférence, les moyens 36 de filtration du dispositif 34 de refroidissement sont constitués par des filtres dits "absolus", tels que des filtres de type « ULPA », voir de type « HEPA ».

On rappellera qu'un filtre « ULPA » acronyme pour « *Ultra Low Penetration Air* » en anglais est appelé en français : filtre à air à très faible pénétration, et qu'un filtre « HEPA » acronyme pour « *High Efficiency Particulate Air »* en anglais est lui appelé en français : filtre à air à très haute efficacité.

Grâce aux moyens de filtration 66, 68, l'air aspiré introduit dans le volume intérieur 20 de l'enceinte 18 est constitué par de l'air filtré présentant un degré élevé de propreté, ledit degré de propreté étant cependant déterminé par le type de filtres utilisés.

L'air est aspiré depuis le plénum 60 par la dépression créée par les moyens 32 de ventilation, par exemple formés par une ou plusieurs roues centrifuges munies d'écopes, puis soufflé transversalement en direction des préformes 14 circulant dans le four 26 suivant le parcours de chauffe.

L'air soufflé par les moyens 32 de ventilation s'écoule par exemple à travers des réflecteurs ajourés (non représentés), de préférence par des fentes d'orientation verticales, qui sont disposés transversalement en vis-à-vis des moyens 30 de chauffage et destinés à réfléchir les rayonnements infrarouges afin d'accroître l'efficacité du chauffage, tout en permettant le passage de l'air de refroidissement des corps des préformes 14.

Ainsi, les moyens 32 de ventilation provoquent un mouvement continu de l'air qui est en permanence brassé au voisinage des moyens 30 de chauffage afin de refroidir les préformes 14, en particulier pour éviter de détériorer (cristallisation) la surface externe du corps des préformes 14 et d'homogénéiser la chauffe du corps des préformes 14 avec un gradient approprié entre les surfaces externe et interne de la paroi du corps.

De plus, les moyens 32 de ventilation créent une surpression dans la zone de chauffage 58b, au voisinage des préformes 14, ce qui empêche que tout autre air que de l'air filtré n'entre en contact avec les préformes 14.

Avantageusement, les moyens 32 de ventilation, telle qu'une roue, sont entraînés en rotation par un moteur (non représenté).

La zone de chauffage 58b comporte des moyens conventionnels (non représentés) de protection thermique des cols des préformes 14 qui sont avantageusement refroidis par une partie du flux d'air A afin d'éviter leur déformation par chauffage.

Avantageusement, la hotte 70 formant les deuxièmes moyens d'extraction du système 54 d'extraction surplombe la zone d'extraction 58c et la zone de chauffage 58b, ladite hotte 70 étant reliée au conduit 56 d'évacuation du système 54 d'extraction.

La hotte 70 est complémentaire des parois de l'enceinte 18 entourant le four 26 de façon à l'isoler par rapport à l'environnement extérieur du four 26 et à éviter, d'une part, la diffusion vers l'extérieur d'air comportant de l'agent stérilisant et, d'autre part, la pollution de l'intérieur du four 26 par des particules polluantes aéroportées.

De préférence, la hotte 70 comporte une embase inférieure de forme rectangulaire et présente une forme évasée vers les zones d'extraction 58c et de chauffage 58b, donc une section de passage décroissante vers le haut.

Le conduit d'évacuation 56 du système 54 d'extraction comporte au moins un moyen 72 d'extraction associé, par exemple un ventilateur, qui est apte à créer une dépression en amont dans le conduit 56 d'évacuation.

Le flux d'air A s'écoule successivement selon le sens des flèches représentées tout d'abord pour assurer le refroidissement des préformes 14 depuis l'extérieur de l'enceinte 18 vers l'intérieur du four 26 constituant une partie du volume interne 20 puis ensuite l'air chaud et chargé d'agent stérilisant est extrait du four 26 grâce à la hotte 70 et au conduit 56 d'évacuation du système 54 d'extraction dont la sortie communique avec l'atmosphère, à l'extérieur du local industriel 16 d'implantation de l'installation 10.

Avantageusement, le système 54 d'extraction comporte des premiers moyens d'extraction formés par une hotte 74 associée au dispositif 22 de décontamination.

De préférence et tel qu'illustré à la figure 1, le dispositif 22 de décontamination des préformes 14 est agencé en amont de l'entrée du four 26.

En variante, le dispositif 22 de décontamination des préformes 14 est agencé en aval de la sortie du four 26, en particulier entre le four 26 et la machine 38 de soufflage.

Dans une telle variante, l'agent stérilisant est projeté sur des préformes 14 chaudes aptes à être transformées dans la machine 28 de soufflage de sorte que l'agent stérilisant est directement évaporé sans s'être déposé par condensation.

La hotte 74 est complémentaire de la portion de l'enceinte 19 isolant ledit dispositif 22 de décontamination de l'environnement extérieur formé par le local industriel 16.

Avantageusement, la hotte 74 secondaire communique avec l'entrée 76E d'un conduit 76 d'aspiration dont la sortie 76S est reliée au conduit 56 d'évacuation raccordé à la hotte 70 associée au four 26.

Grâce à la hotte 74, on réalise une première extraction de l'air au plus près du dispositif 22 de décontamination, c'est-à-dire là où la concentration en agent stérilisant est la plus élevée.

Avantageusement, on réduit la concentration en agent stérilisant de l'air qui se diffuse ensuite à travers le volume interne 20, notamment jusqu'au four 26.

En effet, certains agents stérilisants utilisés comme le péroxyde d'hydrogène sont corrosifs pour les matériaux métalliques employés pour la construction de l'installation 10, en particulier du four 26.

L'agent stérilisant présent dans le flux d'air A qui est extrait par la hotte 70 provient donc de l'évaporation de l'agent stérilisant déposé par le dispositif 22 de décontamination, de préférence par la projection de vapeur sèche d'agent stérilisant pour déposer par condensation un film uniforme de buée au moins sur la paroi interne de chaque préforme 14.

De préférence, la hotte 74 est agencée en surplomb de la chambre 21 de stérilisation du dispositif 22 de décontamination et présente des dimensions complémentaires des parois de l'enceinte 19 de manière à fermer cette partie de l'installation 10.

Avantageusement, la hotte 74 comporte des moyens d'extraction (non représentés), tels qu'un ventilateur, qui lui sont propres et qui sont par exemple aptes à aspirer un débit d'air de l'ordre de 600 m³ par heure.

De préférence, le conduit 76 d'aspiration est alors raccordé au conduit 56 d'évacuation en aval des moyens 72 d'extraction qui évacue, dans le conduit 56 d'évacuation, un flux d'air chaud comportant de l'agent stérilisant correspondant au flux d'air A et à un flux d'air B provenant du conduit 76 d'aspiration relié à la hotte 74.

En variante non représentée, la hotte 74 ou le conduit 76 d'aspiration sont dépourvus de moyens d'extraction et la dépression est obtenue en raccordant la sortie du conduit 76 d'aspiration en amont du moyen 72 d'extraction de la hotte 70 et du conduit 56 d'évacuation.

De préférence, les moyens 72 d'extraction associés à la hotte 70 sont dimensionnés par rapport au volume interne 20, en particulier le four 26.

Avantageusement, les moyens 72 d'extraction associés à la hotte 70 sont par exemple aptes à extraire un débit d'air de l'ordre de 20.000 m³ à 30.000 m³ par heure.

Le raccordement du conduit 76 d'aspiration associé au dispositif 22 de décontamination au conduit 56 d'extraction permet avantageusement de diluer le flux d'air B comportant la concentration la plus élevée en agent stérilisant dans le flux d'air A extrait du four 26 dont la concentration en agent stérilisant est moindre et le débit bien supérieur.

L'air chaud et chargé en agent stérilisant à l'état gazeux correspondant aux flux A et B est ainsi évacué dans l'atmosphère par le système 54 d'extraction, par l'intermédiaire du conduit 56 d'évacuation dont la sortie débouche à l'extérieur du local industriel 16.

Comme expliqué précédemment, le flux d'air rejeté dans l'atmosphère par le système 54 d'extraction d'une telle installation 10 est naturellement et automatiquement remplacé dans le local industriel 16 par de l'air provenant généralement de l'extérieur et dont la qualité n'est pas maîtrisée.

Ainsi, les paramètres tels que la température, la présence de poussières ou particules, ou encore le degré d'humidité dépendent essentiellement du lieu géographique d'implantation du bâtiment de production comportant le local industriel 16.

Par conséquent, il peut être parfois nécessaire de mettre en oeuvre des moyens supplémentaires pour déshumidifier ou pour refroidir l'air en maintenant la température de l'air dans le local industriel 16 dans une plage de température, par exemple de 20 à 25° Celsius, et cela indépendamment de la température de l'air atmosphérique à l'extérieur du local industriel 16.

Conformément aux préjugés techniques de l'homme du métier, l'air extrait par le système 54 d'extraction ne serait être réintroduit dans le local industriel 16 du fait de la présence d'agent stérilisant dans l'air, agent dont la nocivité pour l'homme est bien connue.

De plus, la chaleur transmise à l'air lors de la circulation à travers le four 26 conduirait également à une augmentation importante de la température de l'air dans le local industriel 16.

Ainsi, tout dissuade l'homme du métier de procéder à une quelconque modification du système 54 d'extraction existant dans une telle installation 10.

Cependant l'identification par la demanderesse des problèmes inhérents au renouvellement de l'air résultant d'une telle extraction a en particulier conduit, nonobstant les préjugés techniques existant, à reconsidérer totalement le problème.

Conformément aux enseignements de l'invention, on procède au recyclage d'au moins une partie de l'air extrait par le système 54 d'extraction après traitement de l'agent stérilisant présent dans l'air.

L'invention propose un procédé de recyclage d'air comportant un agent stérilisant dans une installation 10 de fabrication de récipients, caractérisé en ce que ledit procédé comporte au moins les étapes consistant successivement à :
(a) - extraire de l'intérieur de l'enceinte 18 de l'installation 10 de l'air comportant un agent stérilisant, notamment à l'état gazeux ;
(b) - traiter au moins une partie dudit air extrait par des moyens de traitement pour éliminer tout ou partie dudit agent stérilisant afin que la concentration finale en agent stérilisant dans l'air soit inférieure ou égale à une valeur de seuil déterminée ;
(c) - recycler l'air extrait et traité en réintroduisant au moins une partie dudit air dans un local industriel 16 d'implantation de ladite installation 10.

Avantageusement, l'air recyclé présente une qualité supérieure à l'air provenant de l'atmosphère depuis l'extérieur du bâtiment, en particulier le degré d'humidité de l'air est faible du fait de la circulation d'au moins une partie de celui-ci dans le four 26.

Avantageusement, l'air est tout particulièrement plus propre du fait de la filtration opérée par les moyens 36 de filtration tels que les pré-filtres et filtres 66, 68 du dispositif 34 de refroidissement du four 26.

Avantageusement, la chaleur est également susceptible d'être transférée à un fluide caloporteur en vue d'être utilisée à d'autres fins, comme pour le chauffage d'autres parties du bâtiment que le local industriel 16.

Avantageusement, la mise en oeuvre du procédé selon l'invention permet de réaliser une installation 10 plus économique et plus écologique.

Grâce au recyclage de l'air, on limite notamment l'encrassement des moyens 36 de filtration, tels que les pré-filtres et filtres 66, 68.

Avantageusement, on limite les rejets d'agent stérilisant dans l'atmosphère.

On décrira maintenant de manière non limitative un exemple de réalisation préféré de l'invention dans une telle installation 10 mettant en oeuvre ledit procédé de recyclage de l'air.

Avantageusement, l'installation 10 comporte un circuit 78 de recyclage de l'air qui, associé au système 54 d'extraction, comporte des moyens 80 de traitement d'au moins une partie de l'air extrait par le système 54 d'extraction.

Avantageusement, les moyens 80 de traitement sont aptes à éliminer dudit air tout ou partie de l'agent stérilisant afin d'obtenir un air recyclé présentant une concentration en agent stérilisant inférieure ou égale à une valeur de seuil déterminée.

Grâce au traitement de l'agent stérilisant, ledit air extrait et traité est apte à être recyclé en étant réintroduit dans le local industriel 16 d'implantation de l'installation 10.

De préférence et comme illustré aux figures 3 et 4, le circuit 78 de recyclage de l'air comporte au moins un conduit 82 de recirculation.

Le conduit 82 de recirculation de l'air extrait comporte respectivement une entrée 84 reliée au conduit 56 d'évacuation du système 54 d'extraction et une sortie 86 débouchant de préférence directement dans l'environnement extérieur formé par le local 16 industriel d'implantation de ladite installation 10.

Avantageusement, les moyens 80 de traitement destinés à éliminer tout ou partie de l'agent stérilisant, présent dans l'air extrait circulant dans ledit conduit 82 de recirculation, sont disposés dans ledit conduit 82, entre l'entrée 84 et la sortie 86, de manière à être traversé par l'air.

De préférence, le conduit 56 d'évacuation débouchant dans l'atmosphère n'est pas supprimé.

En variante, le conduit 56 d'évacuation est supprimé et le conduit 82 de recirculation raccordé directement à la hotte 70 de manière que l'intégralité de l'air extrait soit traité et réintroduit dans le local 16.

Avantageusement, des moyens 88 de régulation sont agencés au moins dans le conduit 56 d'évacuation, en aval de la jonction avec la conduite 82 de recirculation du circuit 78 de recyclage.

Grâce à de tels moyens 88 de régulation, il est possible de commander sélectivement la répartition du flux d'air extrait, ici entre le conduit 56 d'évacuation débouchant dans l'atmosphère à l'extérieur du local 16 industriel et le conduit 82 de recirculation débouchant directement dans le local 16 industriel d'implantation de l'installation 10 formant l'environnement extérieur autour de l'enceinte 18 de protection.

De préférence, les moyes 88 de régulation sont constitués par un volet monté mobile entre au moins deux positions extrêmes de fermeture, respectivement de fermeture du conduit 56 d'évacuation ou de fermeture du conduit 82 de recirculation.

Avantageusement, les moyens 88 de régulation sont susceptibles d'occuper des positions intermédiaires entre les deux positions extrêmes de fermeture de manière à commander sélectivement la répartition du flux d'air d'extrait entre les conduits 56 et 82 pour recycler tout ou une partie seulement de l'air extrait.

Avantageusement, le circuit 78 de recirculation comporte une unité 90 de commande apte à piloter sélectivement la position des moyens 88 de régulation du flux d'air extrait.

En variante, les moyens 88 de régulation sont constitués par une ou plusieurs vannes agencées dans le ou les conduits, tels que le conduit 56 d'évacuation ou le conduit 82 de recirculation, afin de contrôler la circulation d'air, voir le débit, dans chaque conduit.

De préférence, de tels moyens 88 de régulation à vannes sont aptes à être pilotées par une unité 90 de commande afin d'en commander sélectivement l'ouverture et la fermeture.

Avantageusement, les moyens 80 de traitement du circuit 78 de recyclage comportent au moins un élément oxydant apte à provoquer une réaction catalytique au cours de laquelle tout ou partie de l'agent stérilisant présent dans l'air extrait est décomposé en d'autres produits neutres.

De préférence, l'élément oxydant est constitué par un composé comportant du platine, de l'argent ou tout autre métal approprié pour réaliser la catalyse.

Lorsque l'agent stérilisant utilisé est avantageusement du peroxyde d'hydrogène, on décompose alors celui-ci en eau et en dioxygène, soit des produits ne présentant aucune nocivité ou toxicité.

De préférence, les moyens 80 de traitement sont constitués par au moins un filtre 92 qui, visible sur la figure 3 par arrachement, comporte au moins ledit élément oxydant destiné à interagir avec l'agent stérilisant présent dans l'air extrait.

Les moyens 80 de traitement comportent au moins un filtre 92 de traitement pourvu d'un substrat actif comportant ledit élément oxydant.

Tel qu'illustré aux figures 3 et 4, les moyens 80 de traitement sont agencés pour être traversé par le flux d'air extrait à traiter circulant dans le conduit 82 de recirculation du circuit 78 de recyclage et qui est constitué par tout ou partie de la somme des flux d'air A et B.

Avantageusement, le circuit 78 de recyclage comporte des moyens 94 de contrôle qui, agencés en aval des moyens 80 de traitement, sont aptes à contrôler la concentration en agent stérilisant présente dans l'air de manière à vérifier que ladite concentration est inférieure à la valeur de seuil déterminée.

Avantageusement, les moyens 94 de contrôle de l'air recyclé sont reliés à l'unité 90 de commande qui est apte à actionner sélectivement les moyens 88 de régulation grâce à quoi il est notamment possible de dévier le flux d'air extrait lorsque la concentration en agent stérilisant est supérieure à ladite valeur de seuil, de préférence dans le conduit 56 d'évacuation.

Selon une variante non représentée, le circuit 78 de recyclage comporte un conduit de dérivation qui est raccordé à une extrémité au conduit 82 de recirculation entre la sortie et les moyens 80 de traitement et dont l'autre extrémité est par exemple raccordée au conduit 56 d'évacuation.

Des moyens de régulation sont avantageusement agencés à la jonction des conduits de dérivation et de recirculation, lesdits moyens de régulation étant pilotés, par exemple par l'unité 90 de commande, afin de dévier le flux d'air vers ledit conduit de dérivation lorsque les moyens 94 de contrôle de l'air mesurent une concentration qui est supérieure à la valeur de seuil.

De préférence, l'autre extrémité du conduit de dérivation est raccordée au conduit 56 d'évacuation afin d'évacuer l'air non conforme vers l'atmosphère, à l'extérieur du local industriel 16.

En variante, l'autre extrémité du conduit de dérivation est raccordée en amont des moyens 80 de traitement afin de former une boucle et que l'air traverse à nouveau les moyens 80 de traitement de l'agent stérilisant.

Avantageusement, indépendamment du raccordement de la sortie du conduit de dérivation au conduit 82 ou 56, des moyens de traitement supplémentaires sont disposés dans le conduit de dérivation afin d'éliminer au moins une partie de l'agent stérilisant et d'en réduire la concentration dans l'air.

Avantageusement, le circuit 78 de recyclage comporte des moyens 96 de refroidissement de l'air recyclé illustré schématiquement à la figure 4.

De préférence, les moyens 96 de refroidissement de l'air recyclé sont aptes à être commandés sélectivement pour réguler la température de l'air circulant dans le conduit 82 de recirculation afin que la température dudit air recyclé destiné à être réintroduit dans le local industriel 16 soit inférieure ou égale à une température de consigne déterminée.

Avantageusement, la température ambiante de l'air dans ledit local 16 est maintenue dans une plage optimale de températures données et on limite l'élévation de température du fait de l'apport de chaleur contenue dans l'air extrait provenant, pour le flux d'air A du four 26.

Selon l'exemple de réalisation représenté à la figure 4, les moyens 96 de refroidissement sont agencés dans le conduit 82 de recirculation du circuit 78 de recyclage de l'air et sont juxtaposés aux moyens 80 de traitement de l'agent stérilisant.

Avantageusement, les moyens 96 de refroidissement de l'air sont réalisés sous la forme d'un échangeur thermique du type air-fluide comportant un fluide caloporteur, tel que de l'eau et un additif, qui est mis en circulation pour réaliser un transfert thermique entre ledit fluide caloporteur et l'air extrait de manière à transférer la chaleur contenue de l'air chaud extrait au fluide caloporteur.

Avantageusement, les moyens 96 de refroidissement formé par l'échangeur thermique comporte une entrée 98 et une sortie 100 qui sont reliées à un circuit dans lequel circule ledit fluide caloporteur, la chaleur transférée au fluide pouvant par exemple être notamment utilisée à des fins de chauffage des locaux industriels ou de production d'eau chaude.

Avantageusement, le dispositif 22 de décontamination pour l'installation 10 de fabrication de récipients 12 à partir de préformes 14 en matière thermoplastique destiné à assurer la décontamination des préformes 14 par application d'au moins un agent stérilisant comporte des moyens 80 de traitement aptes à éliminer de l'air extrait de la chambre 21 de stérilisation tout ou partie de l'agent stérilisant afin d'obtenir en sortie un air présentant une concentration moindre en agent stérilisant.

## Revendications

1. Installation (10) pour la fabrication de récipients (12) à partir d'une préforme (14) en matière thermoplastique, comportant au moins une enceinte (18) de protection destinée à isoler un volume (20) intérieur de l'installation (10) par rapport à l'air ambiant compris dans un local industriel (16) d'implantation de l'installation (10) et comportant agencés dans ledit volume (20) intérieur au moins :
- un dispositif (22) de décontamination des préformes (14) par application d'au moins un agent stérilisant,
- une unité de conditionnement thermique des préformes (14) constituée d'un four (26) comportant des moyens (30) de chauffage associés à un dispositif (34) de refroidissement par air qui comporte des moyens (36) de filtration de l'air ambiant et des moyens (32) de ventilation propres à assurer un refroidissement d'au moins une partie des préformes (14) ;
- une unité (38) de transformation des préformes (14) en récipients (12),
et comportant un système (54) d'extraction apte à extraire du volume (20) intérieur de l'enceinte de l'air chargé en agent stérilisant pour l'évacuer dans l'atmosphère, à l'extérieur du local industriel (16), par l'intermédiaire d'au moins un conduit (56) d'évacuation,
**caractérisée en ce que** l'installation (10) comporte un circuit (78) de recyclage de l'air comportant des moyens (80) de traitement aptes à éliminer tout ou partie de l'agent stérilisant d'au moins une partie de l'air extrait grâce au système (54) d'extraction de manière à obtenir un air traité qui, présentant une concentration en agent stérilisant inférieure ou égale à une valeur de seuil déterminée, est recyclé en étant réintroduit dans le local industriel (16) formant l'environnement extérieur de ladite installation (10).

2. Installation (10) selon la revendication 1, **caractérisée en ce que** le circuit (78) de recyclage de l'air comporte au moins un conduit (82) de recirculation comportant respectivement une entrée reliée au conduit (56) d'évacuation du système (54) d'extraction et une sortie débouchant directement dans le local industriel (16) d'implantation de ladite installation (10), lesdits moyens (80) de traitement étant au moins disposés entre lesdites entrée et sortie du conduit (82) de recirculation.

3. Installation (10) selon la revendication 2, **caractérisée en ce que** le circuit (78) de recyclage de l'air comporte des moyens (88) de régulation aptes à commander sélectivement la répartition du flux d'air extrait entre le conduit (56) d'évacuation débouchant dans l'atmosphère à l'extérieur du local industriel (16) et le conduit (82) de recirculation débouchant directement dans le local industriel (16) d'implantation de l'installation (10).

4. Installation (10) selon la revendication 2, **caractérisée en ce que** les moyens (80) de traitement sont constitués par au moins un filtre (92) agencé pour être traversé par le flux d'air extrait à traiter circulant dans le conduit (82) de recirculation du circuit (78) de recyclage et comportant au moins un élément oxydant apte à provoquer une réaction catalytique avec l'air chargé en agent stérilisant afin de décomposer tout ou partie de l'agent stérilisant présent dans l'air en d'autres produits neutres et d'atteindre au moins ladite valeur de seuil.

5. Installation (10) selon la revendication 1, **caractérisée en ce que** le circuit (78) de recyclage comporte des moyens (94) de contrôle qui, agencés en aval des moyens (80) de traitement, sont aptes à analyser la concentration en agent stérilisant présent dans l'air de manière à contrôler la concentration en agent stérilisant par rapport à ladite valeur de seuil déterminée.

6. Installation (10) selon la revendication 5, **caractérisée en ce que** les moyens (94) de contrôle de l'air recyclé sont pilotés par une unité (90) de commande qui est apte à actionner sélectivement des moyens (88) de régulation lorsque la concentration en agent stérilisant est supérieure à ladite valeur de seuil, notamment aptes à dévier le flux d'air extrait vers le conduit (56) d'évacuation.

7. Installation (10) selon la revendication 6, **caractérisée en ce que** le circuit (78) de recyclage comporte un conduit de dérivation dont l'entrée est reliée au conduit (82) de recirculation, en aval des moyens (80) de traitement et en amont de la sortie du conduit (56) d'évacuation, de manière à évacuer, avant la réintroduction dans le local industriel (16), tout air que les moyens (94) de contrôle analysent comme présentant une concentration en agent stérilisant supérieure à ladite valeur de seuil.

8. Installation (10) selon la revendication 2, **caractérisée en ce que** le circuit (78) de recyclage comporte des moyens (96) de refroidissement de l'air qui sont aptes à être commandés sélectivement pour réguler la température de l'air circulant dans le conduit (82) de recirculation afin que la température dudit air recyclé, destiné à être réintroduit dans le local industriel (16), soit inférieure ou égale à une température de consigne déterminée pour maintenir dans une plage optimale de températures la température ambiante de l'air dans ledit local industriel (16).

9. Installation (10) selon l'une quelconque des revendications précédentes, **caractérisée en ce que** le système (54) d'extraction comporte au moins des premiers moyens (74) d'extraction associés au dispositif (22) de décontamination et des deuxièmes moyens (70) d'extraction associés au four (26) et **en ce que** des moyens (80) de traitement sont au moins agencés entre une chambre (21) de stérilisation du dispositif (22) dans laquelle les premiers moyens (74) d'extraction aspire l'air chargé en agent stérilisant et un conduit (76) d'aspiration dont l'entrée est reliée auxdits premiers moyens (74) et dont la sortie est reliée au conduit (56) d'évacuation.

10. Procédé de recyclage d'air comportant un agent stérilisant dans une installation (10) de fabrication de récipients, **caractérisé en ce que** ledit procédé comporte au moins les étapes consistant successivement à :
(a) - extraire de l'intérieur de l'enceinte (18) de l'installation (10) de l'air comportant un agent stérilisant;
(b) - traiter au moins une partie dudit air extrait pour éliminer tout ou partie dudit agent stérilisant afin que la concentration finale en agent stérilisant dans l'air soit inférieure ou égale à une valeur de seuil déterminée ;
(c) - recycler l'air extrait et traité en réintroduisant au moins une partie dudit air dans un local industriel (16) d'implantation de ladite installation (10).

## Patentansprüche

1. Anlage (10) für die Herstellung von Behältern (12) ausgehend von einem Vorformling (14) aus thermoplastischem Material, mindestens einen abgeschlossenen Schutzbereich (18) umfassend, der dazu vorgesehen ist, einen Innenraum (20) der Anlage (10) im Verhältnis zur Umgebungsluft zu isolieren, die in einer Fabrikhalle (16) vorhanden ist, wo die Anlage (10) aufgestellt ist, und, angeordnet in dem Innenraum (20), mindestens umfassend:
- eine Dekontaminierungsvorrichtung (22) der Vorformlinge (14) durch Anwendung von mindestens einem Sterilisationsmittel,
- eine thermische Bearbeitungseinheit der Vorformlinge (14), die aus einem Ofen (26) besteht, der Heizmittel (30) umfasst, die einer Kühlvorrichtung (34) durch Luft zugeordnet sind, die Filtermittel (36) der Umgebungsluft und Ventilationsmittel (32) umfasst, die fähig sind, eine Kühlung von mindestens einem Bereich der Vorformlinge (14) sicherzustellen;
- eine Weiterverarbeitungseinheit (38) der Vorformlinge (14) zu Behältern (12)
und
ein Abzugssystem (54) umfassend, das geeignet ist, um mit Sterilisationsmittel belastete Luft aus dem Innenraum (20) des abgeschlossenen Bereiches abzuziehen, um sie in die Atmosphäre außerhalb der Fabrikhalle (16) mit Hilfe von mindestens einem Ableitungsrohr (56) abzuleiten,
**dadurch gekennzeichnet, dass** die Anlage (10) einen Wiederaufbereitungskreislauf (78) der Luft umfasst, Behandlungsmittel (80) umfassend, die geeignet sind, das ganze Sterilisationsmittel oder einen Teil davon aus mindestens einem Teil der Luft zu entfernen, die dank des Abzugssystems (54) dergestalt abgezogen wird, dass behandelte Luft erhalten wird, die, wenn sie eine Sterilisationsmittelkonzentration aufweist, die niedriger oder gleich einem bestimmten Schwellenwert ist, wiederaufbereitet wird, indem sie der Fabrikhalle (16) wieder zugeführt wird, welche die äußere Umgebung der Anlage (10) ausbildet.

2. Anlage (10) nach Anspruch 1, **dadurch gekennzeichnet, dass** der Wiederaufbereitungskreislauf (78) der Luft mindestens ein Rezirkulationsrohr (82) umfasst, das jeweils einen Eingang, der mit dem Ableitungsrohr (56) des Abzugssystems (54) verbunden ist, und einen Ausgang umfasst, der direkt in die Fabrikhalle (16) einmündet, wo die Anlage (10) aufgestellt ist, wobei die Behandlungsmittel (80) mindestens zwischen dem Eingang und dem Ausgang des Rezirkulationsrohrs (82) angeordnet sind.

3. Anlage (10) nach Anspruch 2, **dadurch gekennzeichnet, dass** der Wiederaufbereitungskreislauf (78) der Luft Regulierungsmittel (88) umfasst, die geeignet sind, um auf selektive Weise die Aufteilung des abgezogenen Luftstromes zwischen dem Ableitungsrohr (56), das in die Atmosphäre außerhalb der Fabrikhalle (16) einmündet, und dem Rezirkulationsrohr (82) zu steuern, das direkt in die Fabrikhalle (16) einmündet, wo die Anlage (10) aufgestellt ist.

4. Anlage (10) nach Anspruch 2, **dadurch gekennzeichnet, dass** die Behandlungsmittel (80) aus mindestens einem Filter (92) bestehen, der angeordnet ist, damit der abgezogene, zu behandelnde Luftstrom durch ihn hindurchgeht, der durch das Rezirkulationsrohr (82) des Wiederaufbereitungskreislaufs (78) zirkuliert und mindestens ein Oxidationselement umfasst, das geeignet ist, um eine katalytische Reaktion mit der Luft zu provozieren, die mit einem Sterilisationsmittel belastet ist, um das gesamte Sterilisationsmittel, das in der Luft enthalten ist, oder einen Teil davon in andere neutrale Produkte aufzuspalten und um mindestens den Schwellenwert zu erreichen.

5. Anlage (10) nach Anspruch 1, **dadurch gekennzeichnet, dass** der Wiederaufbereitungskreislauf (78) Steuermittel (94) umfasst, die, stromabwärts der Behandlungsmittel (80) angeordnet, geeignet sind, um die in der Luft vorhandene Sterilisationsmittelkonzentration dergestalt zu analysieren, dass die Sterilisationsmittelkonzentration im Verhältnis zu dem bestimmten Schwellenwert gesteuert wird.

6. Anlage (10) nach Anspruch 5, **dadurch gekennzeichnet, dass** die Steuermittel (94) der wiederaufbereiteten Luft durch eine Steuereinheit (90) gesteuert werden, die geeignet ist, um auf selektive Weise die Regulierungsmittel (88) zu betätigen, wenn die Sterilisationsmittelkonzentration höher als der Schwellenwert ist, die insbesondere geeignet sind, um den abgezogenen Luftstrom zu dem Ableitungsrohr (56) umzuleiten.

7. Anlage (10) nach Anspruch 6, **dadurch gekennzeichnet, dass** der Wiederaufbereitungskreislauf (78) ein Abzweigungsrohr umfasst, dessen Eingang mit dem Rezirkulationsrohr (82) stromabwärts der Behandlungsmittel (80) und stromaufwärts des Ausgangs des Ableitungsrohrs (56) dergestalt verbunden ist, dass die gesamte Luft, bei der die Analyse der Steuermittel (94) ergeben hat, dass sie eine Sterilisationsmittelkonzentration enthält, die höher als der Schwellenwert ist, vor der Wiedereinführung in die Fabrikhalle (16) abgeleitet wird.

8. Anlage (10) nach Anspruch 2, **dadurch gekennzeichnet, dass** der Wiederaufbereitungskreislauf (78) Kühlmittel (96) der Luft umfasst, die geeignet sind, um gesteuert zu werden, damit sie auf selektive Weise die Temperatur der Luft regulieren, die in dem Rezirkulationsrohr (82) zirkuliert, damit die Temperatur der wiederaufbereiteten Luft, welche wieder in die Fabrikhalle (16) eingeführt werden soll, niedriger oder gleich einer bestimmten Solltemperatur ist, um die Umgebungstemperatur der Luft in der Fabrikhalle (16) in einem optimalen Temperaturbereich zu halten.

9. Anlage (10) nach irgendeinem der vorhergehenden Ansprüche, **dadurch gekennzeichnet, dass** das Abzugssystem (54) mindestens erste Abzugsmittel (74), die der Dekontaminierungsvorrichtung (22) zugehörig sind, und zweite Abzugsmittel (70) umfasst, die dem Ofen (26) zugehörig sind, und dadurch dass die Behandlungsmittel (80) mindestens zwischen einer Sterilisationskammer (21) der Vorrichtung (22), in welcher die ersten Abzugsmittel (74) die Luft ansaugen, die mit Sterilisationsmittel belastet ist, und einem Ansaugrohr (76) angeordnet sind, dessen Eingang mit den ersten Mitteln (74) verbunden ist und dessen Ausgang mit dem Ableitungsrohr (56) verbunden ist.

10. Verfahren zur Wiederaufbereitung von Luft, die ein Sterilisationsmittel umfasst, in einer Fabrikationsanlage (10) von Behältern, **dadurch gekennzeichnet, dass** das Verfahren mindestens die Schritte umfasst, die aufeinanderfolgend daraus bestehen:
(a)- aus dem Inneren des abgeschlossenen Bereichs (18) der Anlage (10) Luft abzuziehen, die ein Sterilisationsmittel umfasst;
(b)- mindestens einen Teil der abgezogenen Luft zu behandeln, um das gesamte Sterilisationsmittel oder einen Teil davon zu entfernen, damit die endgültige Sterilisationsmittelkonzentration in der Luft niedriger als ein bestimmter Schwellenwert oder ihm gleich ist;
(c)- die abgezogene und behandelte Luft wiederaufzubereiten, indem mindestens ein Teil der Luft wieder in eine Fabrikhalle (16) eingeführt wird, wo die Anlage (10) aufgestellt ist.

## Claims

1. An installation (10) for manufacturing containers (12) from a preform (14) made of thermoplastic material, comprising at least one protection chamber (18) intended to isolate an internal volume (20) of the installation (10) from the ambient air contained in industrial premises (16) where the installation (10) is located and comprising, arranged in said internal volume (20), at least:
- a device (22) for decontaminating the preforms (14) by the application of at least one sterilizing agent,
- a thermal conditioning unit for the preforms (14) consisting of an oven (26) comprising heating means (30) associated with an air cooling device (34) which comprises means (36) for filtering the ambient air and ventilation means (32) specifically for ensuring a cooling of at least a part of the preforms (14);
- a unit (38) for transforming the preforms (14) into containers (12),
and comprising an extraction system (54) suitable for extracting, from the internal volume (20) of the chamber, air charged with sterilizing agent to evacuate it into the atmosphere, outside the industrial premises (16), via at least one exhaust duct (56),
**characterized in that** the installation (10) comprises an air recycling circuit (78) comprising treatment means (80) suitable for eliminating all or part of the sterilizing agent from at least a part of the air extracted using the extraction system (54) so as to obtain treated air which, having a concentration of sterilizing agent less than or equal to a determined threshold value, is recycled by being reintroduced into the industrial premises (16) forming the external environment of said installation (10).

2. The installation (10) as claimed in claim 1, **characterized in that** the air recycling circuit (78) comprises at least one recirculation duct (82) comprising, respectively, an input linked to the exhaust duct (56) of the extraction system (54) and an output opening directly into the industrial premises (16) where said installation (10) is located, said treatment means (80) being at least arranged between said input and output of the recirculation duct (82).

3. The installation (10) as claimed in claim 2, **characterized in that** the air recycling circuit (78) comprises regulation means (88) suitable for selectively controlling the distribution of the flow of extracted air between the exhaust duct (56) opening into the atmosphere outside the industrial premises (16) and the recirculation duct (82) opening directly into the industrial premises (16) where the installation (10) is located.

4. The installation (10) as claimed in claim 2, **characterized in that** the treatment means (80) are made up of at least one filter (92) arranged to be passed through by the flow of extracted air to be treated circulating in the recirculation duct (82) of the recycling circuit (78) and comprising at least one oxidizing element suitable for provoking a catalytic reaction with the air charged with sterilizing agent in order to break down all or part of the sterilizing agent present in the air into other neutral products and achieve at least said threshold value.

5. The installation (10) as claimed in claim 1, **characterized in that** the recycling circuit (78) comprises checking means (94) which, arranged downstream of the treatment means (80), are suitable for analyzing the concentration of sterilizing agent present in the air so as to check the concentration of sterilizing agent against said determined threshold value.

6. The installation (10) as claimed in claim 5, **characterized in that** the means (94) for checking the recycled air are driven by a control unit (90) which is suitable for selectively actuating regulation means (88) when the concentration of sterilizing agent is greater than said threshold value, in particular suitable for diverting the flow of extracted air to the exhaust duct (56).

7. The installation (10) as claimed in claim 6, **characterized in that** the recycling circuit (78) comprises a branch duct, the input of which is linked to the recirculation duct (82), downstream of the treatment means (80) and upstream of the output of the exhaust duct (56), so as to evacuate, before the reintroduction into the industrial premises (16), any air that the checking means (94) analyze as having a concentration of sterilizing agent greater than said threshold value.

8. The installation (10) as claimed in claim 2, **characterized in that** the recycling circuit (78) comprises air cooling means (96) which can be controlled selectively to regulate the temperature of the air circulating in the recirculation duct (82) so that the temperature of said recycled air, intended to be reintroduced into the industrial premises (16), is less than or equal to a setpoint temperature determined to maintain the ambient temperature of the air in said industrial premises (16) within an optimum temperature range.

9. The installation (10) as claimed in any one of the preceding claims, **characterized in that** the extraction system (54) comprises at least first extraction means (74) associated with the decontamination device (22) and second extraction means (70) associated with the oven (26) and **in that** treatment means (80) are at least arranged between a sterilization chamber (21) of the device (22) from which the first extraction means (74) suck the air charged with sterilizing agent and a suction duct (76), the input of which is linked to said first means (74) and the output of which is linked to the exhaust duct (56).

10. A method for recycling air containing a sterilizing agent in a container manufacturing installation (10), **characterized in that** said method comprises at least the steps consisting successively in:
(a) - extracting from the interior of the chamber (18) of the installation (10) air containing a sterilizing agent;
(b) - treating at least a part of said extracted air to eliminate all or part of said sterilizing agent in order for the final concentration of sterilizing agent in the air to be less than or equal to a determined threshold value;
(c) - recycling the extracted and treated air by reintroducing at least a part of said air into industrial premises (16) where said installation (10) is located.
